## Europäisches Patentamt

## European Patent Office

## Office européen des brevets

(19)

(11) Veröffentlichungsnummer : **0 025 068**
**B1**

(12)

# EUROPÄISCHE PATENTSCHRIFT

(45) Veröffentlichungstag der Patentschrift :
24.11.82

(21) Anmeldenummer : 79103299.8

(22) Anmeldetag : 05.09.79

(51) Int. Cl.³ : **C 02 F   1/52**

(54) Verfahren und Vorrichtung zur Aufbereitung von Rohwasser.

(43) Veröffentlichungstag der Anmeldung :
18.03.81 (Patentblatt 81/11)

(45) Bekanntmachung des Hinweises auf die Patenterteilung : 24.11.82 Patentblatt 82/47

(84) Benannte Vertragsstaaten :
BE CH FR GB IT LU NL SE

(56) Entgegenhaltungen :
CH A 259 826
DE A 2 240 641
DE A 2 440 793
DE B 1 133 319
FR A 1 031 065
US A 2 913 114

(73) Patentinhaber : **Moll, Hans-Georg, Dr.**
**Görzallee 49a**
**D-1000 Berlin 45 (DE)**

**Grohmann, Andreas, Dr.**
**Drakestrasse 52a**
**D-1000 Berlin 45 (DE)**

**Hässelbarth, Ulrich, Dr.**
**Adolfstrasse 3**
**D-1000 Berlin 37 (DE)**

**Marks, Helmuth**
**Maulbeerallee 54**
**D-1000 Berlin 20 (DE)**

(72) Erfinder : **Moll, Hans-Georg, Dr.**
**Görzallee 49a**
**D-1000 Berlin 45 (DE)**
Erfinder : **Grohmann, Andreas, Dr.**
**Drakestrasse 52a**
**D-1000 Berlin 45 (DE)**
Erfinder : **Hässelbarth, Ulrich, Dr.**
**Adolfstrasse 3**
**D-1000 Berlin 37 (DE)**
Erfinder : **Marks, Helmuth**
**Maulbeerallee 54**
**D-1000 Berlin 20 (DE)**

(74) Vertreter : **Pfenning, Joachim**
**PATENTANWÄLTE PFENNING MAAS MEINIG SPOTT**
**Kurfürstendamm 170**
**D-1000 Berlin 15 (DE)**

Verfahren und Vorrichtung zur Aufbereitung von Rohwasser

Die Erfindung bezieht sich auf ein Verfahren und eine Vorrichtung zur Aufbereitung von Rohwasser, beispielsweise Oberflächenwasser, Abwasser und dergleichen.

Durch die Aufbereitung sollen die in dem Rohwasser vorhandenen Trübstoffe entfernt werden, um ein Klarwasser zu gewinnen. Dies geschieht dadurch, daß dem Rohwasser ein Flockungsmittel zugegeben wird, um die Trübstoffe zu Flocken auszubilden, die im Wege der Sedimentation abgeschieden werden. Zu diesem Zwecke wird das mit dem Flockungsmittel versetzte Rohwasser durch Sedimentationsbehälter gegeben, in denen die Flockenbildung erfolgt, und in denen die gebildeten Flocken durch Absinken sich absetzen gelassen werden, während das flockenfreie Rohwasser bei Durchströmung des Sedimentationsbehälters nach oben steigt und von der Wasseroberfläche als Klarwasser abgezogen wird. Bei dem Durchströmen des Sedimentationsbehälters muß das mit dem Flockungsmittel versetzte Rohwasser eine ausreichende Zeit in dem Behälter verweilen, um die Flockenbildung zu ermöglichen, andererseits muß in dem Sedimentationsbehälter eine vertikale aufwärtsgerichtete Strömung herrschen, die jedoch kleiner sein muß als die Sinkgeschwindigkeit der zu sedimentierenden Flocken, damit diese sich am Boden des Behälters als Schlamm absetzen können und das Klarwasser von Wasserspiegel des Behälters abgezogen werden kann. Die Formen und die Ausbildung der Sedimentationsbehälter werden von diesen Forderungen bestimmt. Es sind Sedimentationsbehälter verschiedener Ausführungsformen bekannt. Bei einem derartigen rechteckigen Behälter wird das mit dem Flockungsmittel versetzte Rohwasser auf der einen Schmalseite im unteren Behälterbereich zugeführt und nach Durchströmung des Behälters wird an der entgegengesetzten Schmalseite von der Wasseroberfläche das Klarwasser abgeführt, während der durch die abgesetzten Flocken am Behälterboden befindliche Schlamm intermittierend durch Räumung entfernt wird. Andererseits sind zylindrische Sedimentationsbehälter bekannt, bei denen das Rohwasser von unten her einer mittig in dem Behälter angeordneten Kammer zugeführt wird, die mit Rührflügeln versehen ist. Das Rohwasser wird unterhalb des Wasserspiegels aus der Kammer nach unten in den Behälter geführt, in dem die Flockenbildung und -ablagerung erfolgt, während das aufsteigende Klarwasser über einen die Wasseroberfläche schneidenden Überlauf gesammelt und abgeführt wird. Um eine optimale Arbeitsweise der Sedimentationsbehälter zu gewährleisten, muß dafür Sorge getragen werden, daß eine gleichmäßige, den gesamten Querschnitt des Behälters erfassende Durchströmung erreicht wird, bei der nur geringe vertikale Strömungen sich ergeben, die das Absinken der Flocken gestatten. Wenn auch nur an einer Stelle eine erhöhte Aufwärtsbewegung erfolgt, wird die Belastbarkeit und damit die Wirkungsweise des gesamten Sedimentationsbehälters herabgesetzt. Das gleiche erfolgt, wenn innerhalb des Behälters Gebiete auftreten, die von der Durchströmung nicht erfaßt werden, so daß nicht das gesamte zur Verfügung stehende Volumen für die Sedimentation ausgenutzt werden kann. Um diesen Forderungen zu genügen, sind bei sämtlichen bekannten Sedimentationsbehältern aufwendige der Führung des zugeführten Wassers dienende Einbauten erforderlich, ohne daß mit absoluter Zuverlässigkeit sich einerseits die erforderliche über den gesamten Behälterquerschnitt gleichmäßige Durchströmung und andererseits eine gleichmäßige aufwärtsgerichtete Strömung mit der erforderlichen geringen Geschwindigkeit erreichen läßt, so daß trotz des erforderlichen Aufwandes die bekannten Sedimentationsbehälter in ihrem Fassungsvermögen immer größer aufgrund der sich ergebenden Unregelmäßigkeiten ausgelegt werden mußten, als es bei einwandfreien Strömungsverhältnissen erforderlich wäre.

Der Erfindung liegt die Aufgabe zugrunde, ein Verfahren und eine Vorrichtung zu schaffen, die optimale Bedingungen hinsichtlich der Strömungsverhältnisse bei einem geringstmöglichen Aufwand gewährleistet.

Diese Aufgabe wird bei einem Verfahren nach dem Oberbegriff des Hauptanspruches dadurch gelöst, daß die Umfangsgeschwindigkeit des am Umfangsbereich des Behälters einströmenden Wassers durch Abbremsung an einer konzentrischen Zwischenwand mit auf ihrem Umfang verteilten Durchbrechungen so weit verringert wird, daß das Auftreten von aufwärtsgerichteten Sekundärströmungen unterbunden wird, und daß das Klarwasser durch die Behältermitte nach unten abgeführt wird.

Es ist bereits ein nach dem Oberbegriff des Hauptanspruches arbeitendes Verfahren bekannt (DE-A-2 440 793), bei dem das dem zylindrischen Behälter tangential zugeführte Rohwasser im Gegensatz zum kennzeichnenden Teil des Hauptanspruches spiralförmig von innen nach außen fließt, so daß dieser Vorveröffentlichung keine Hinweise auf den Anmeldungsgegenstand entnommen werden können.

Bei azimutalem Einströmen einer Flüssigkeit am Umfang eines zylindrischen Behälters treten zwangsläufig Sekundärströmungen auf, die zu einer vertikalen Aufwärtsströmung der Flüssigkeit in der Behältermitte führen, was als sogenannter Teetassen-Effekt bezeichnet wird. Das Auftreten dieser Sekundärströmung in der Behältermitte, die in ihrer Aufwärtsrichtung erheblich größer ist als die Sinkgeschwindigkeit der Flocken, hat es bisher verhindert, bei der Sedimentation von Rohwasser mit einem tangential in einem zylindrischen Behälter eingeführten Rohwasserstrom zu arbeiten, trotzdem durch die tangentiale Einführung in den Behälter eine gleichmäßige Durchströmung des Behälters radial zur Mitte hin unter Ausnutzung des gesamten Behältervolumens sich ergibt. Es bedurfte erst der erfinderischen Erkenntnis der Anmelderin, daß sich die Eintrittsumfangsgeschwindigkeit des Rohwassers so weit abbremsen läßt, daß die zu dem Teetassen-Effekt führenden, am Umfang abwärts- und in der Mitte des Behälters aufwärtsgerichteten Sekundärströmungen unterbunden werden, so daß in der Behältermitte die gebildeten Flocken sich auf dem Behälterboden absetzen und das Klarwasser durch die Behältermitte nach unten abgeführt werden kann.

Die der Durchführung des Verfahrens dienende Vorrichtung ist dadurch gekennzeichnet, daß in dem Behälter eine mit seiner zylindrischen Umfangswand einen Ringspalt bildende, den Behälter bis in die Nähe des Bodens durchgreifende, mit auf ihrem Umfang verteilten Durchbrechungen versehene Zwischenwand angeordnet ist, und daß in der Behältermitte eine axiale den Behälterboden durchgreifende Rohrleitung vorgesehen ist, die an ihrem oberen offenen Ende eine zentrische, unterhalb des Wasserspiegels des Behälters liegende ringförmige Scheibe trägt.

Ein weiteres Merkmal der Vorrichtung besteht darin, daß die Zwischenwand aus einer Mehrzahl von zu einem Zylinder aneinandergefügten, mit Lochungen versehenen Blechen rechteckigen Querschnitts besteht.

Eine abgewandelte Ausführungsform der Vorrichtung kennzeichnet sich dadurch, daß die Zwischenwand aus einem oberen und einem unteren Ring besteht, zwischen denen an den Ringinnenflächen befestigte, über den Umfang verteilte, Durchtrittsspalte bildende Leitflächen angeordnet sind. Hierbei ist vorteilhaft, daß die Leitflächen der Richtung des in den Behälter einströmenden Rohwassers entgegengesetzt gerichtete Neigungen aufweisen.

Schließlich ist noch von Bedeutung, daß zwischen dem Boden des Behälters und dem unteren Ende der Zwischenwand ein der Aufnahme eines Räumers dienender Spalt besteht.

In Abhängigkeit von dem erforderlichen Durchsatz und der dadurch bestimmten Größe des Behälters können an der zylindrischen Behälterwand ein oder mehrere tangential gerichtete Zulaufstutzen angeordnet sein, wobei es bei Anordnung mehrerer Zulaufstutzen zweckmäßig ist, die Stutzen gleichmäßig über den Umfang der zylindrischen Behälterwand zu verteilen. Beim Austritt aus dem bzw. den Zulaufstutzen tritt das einströmende Rohwasser mit der Zwischenwand in kontakt, wodurch eine Abbremsung der Umfangsgeschwindigkeit erfolgt wegen der durch die Zwischenwand erzielten Reibung an der Oberfläche und an den der Strömungsrichtung entgegengerichteten Stirnkanten der Durchbrechungen, wobei das Rohwasser zum Durchtritt durch die Durchbrechungen gezwungen wird. Diese durch die Zwischenwand bedingte Abbremsung der Umfangsgeschwindigkeit des zugeführten Rohwassers bewirkt, daß in der Mitte des Behälters der bekannte Teetassen-Effekt nicht mehr auftritt, sondern daß unter Wirkung des vorzugsweise dem unteren Umfangsbereich des Behälters tangential ausströmenden Rohwassers eine Aufwärtsströmung im Mittelbereich des Behälters erfolgt, deren Geschwindigkeit geringer ist als die Sinkgeschwindigkeit der Flocken, so daß die gebildeten Flocken sich auf dem Behälterboden absetzen können, von dem sie in an sich bekannter Weise abgeräumt werden. Eine Abbremsung der Umfangsgeschwindigkeit des zugeführten Rohwassers und eine Aufwärtsströmung im Mittelbereich des Behälters mit einer unterhalb der Sinkgeschwindigkeit liegenden Geschwindigkeit lassen sich auch erreichen, wenn statt der mit Durchbrechungen versehenen Zwischenwand eine solche aus Leitblechen vorgesehen ist, wobei die Leitbleche in Abhängigkeit von den jeweiligen Betriebsverhältnissen unterschiedliche Längen und unterschiedliche Neigungen und ebenso auch unterschiedliche gegenseitige Abstände besitzen können.

Das in der Behältermitte aufsteigende Klarwasser wird über eine auf dem offenen Ende eines den Behälter nach unten durchgreifenden Rohres befestigte ringförmige Scheibe in die Rohrleitung eingeführt. Diese Scheibe ist unterhalb des Wasserspiegels des Behälters angeordnet ; die Anordnung einer den Wasserspiegel schneidenden Überlaufkante ist nicht erforderlich. Die Anordnung der Scheibe hat den Vorteil, daß die Sedimentation auch bei niedrigen Temperaturen unterhalb des Gefrierpunktes in einwandfreier Weise erfolgen kann, was bei einer bisher erforderlichen, die Wasseroberfläche schneidenden Überlaufkante wegen der hierbei gegebenen Vereisungsgefahr nicht möglich ist.

Es ist klar, daß zur Erzielung einer gleichmäßigen abgebremsten Strömungsgeschwindigkeit in dem Sedimentationsbehälter der Durchmesser und die Zahl der Durchbrechungen und damit die für den Wasserdurchtritt gegebene Siebfläche der Zwischenwand nicht auf dem gesamten Umfang gleichmäßig sein können, sondern von bestimmten Faktoren abhängig sind, so muß beispielsweise die Zwischenwand bei Anwendung eines Zulaufstutzens anders ausgebildet sein als bei Verwendung von zwei Zulaufstutzen, und wieder anders ausgebildet sein bei Verwendung von drei und mehr Zulaufstutzen. Außerdem wird in der Höhe der Zwischenwand gesehen der Durchmesser und die Zahl der Durchbrechungen ebenfalls nicht gleichmäßig sein können in Abhängigkeit von der Höhenlage, in der das Rohwasser in den Behälter gegeben wird. Die Größe der Durchbrechungen und ihre Zahl ist auf die jeweiligen Betriebsverhältnisse abzustimmen. Hierbei ist es vorteilhaft, die Zwischenwand aus einzelnen rechteckigen Lochblechen zu bilden, die entsprechend ihrer Anordnung im Behälter, beispielsweise hinsichtlich ihres Abstandes von einer Einströmstelle auf die dort herrschenden Betriebsbedingungen abgestellt werden können ; durch Zusammenfügung entsprechend abgestimmter Lochbleche läßt sich eine Zwischenwand erreichen, die genau auf die jeweiligen Betriebsverhältnisse abgestimmt sind, so daß Unregelmäßigkeiten in der Strömung vermieden werden. Die Anordnung besonderer Leitorgane zur Führung des Wasserstromes ist nicht erforderlich, da zufolge der erfindungsgemäß angeordneten mit Durchbrechungen versehenen Zwischenwand sich eine gleichmäßige radiale, durch einen Drall überlagerte Strömung zur Behältermitte ergibt, in der eine aufwärtsgerichtete Strömung herrscht, die kleiner ist als die Sinkgeschwindigkeit der Flocken. Bei Verwendung einer aus Leitblechen gebildeten Zwischenwand müssen selbstverständlich sowohl der Abstand der Leitbleche als auch ihre Neigung auf die jeweiligen Verhältnisse abgestimmt werden, wobei sowohl die Abstände als auch die Neigungen über den Umfang unterschiedlich sein können. Durch entsprechende Einstellung der Neigungen der einzelnen Leitbleche wird der ursprüngliche Drall der einströmenden Flüssigkeit bis auf einen Restdrall abgebaut, der so bemessen ist, daß die Geschwindigkeit des in der Behältermitte aufsteigenden Wassers geringer ist als die Sinkgeschwindigkeit der Flocken. Mit den erfindungsgemäß angeordneten Leitblechen läßt sich im Behälterinneren sogar ein Drall erreichen, der entgegengesetzt zum Drall des einströmenden Rohwassers ist. Durch die Leitbleche ist eine bessere und schnellere Anpassung an unterschiedliche Betriebsverhältnisse möglich, wenn man, was ohne Schwierigkeiten erreichbar ist, die Leitbleche in ihren Neigungen verstellbar an den beiden ringförmigen Bändern anordnet.

Das erfindungsgemäße Verfahren und die seiner Durchführung dienende Vorrichtung sind gegenüber den bekannten Verfahren und Vorrichtungen insoweit vorteilhaft, als ein außerordentlich geringer Bauaufwand erforderlich ist, eine volle Ausnutzung des Behältervolumens als Sedimentationsgebiet gewährleistet ist, eine genaue Einregulierung der Behälterdurchströmung durch entsprechende Ausbildung der Zwischenwand gewährleistet ist, keinerlei schräge Flächen, an denen Flocken sich absetzen könnten, vorhanden sind und schließlich eine volle Ausnutzung der mit dem Behälter bebauten Fläche gegeben ist.

Die beiliegende Zeichnung zeigt in schematischer Darstellung die der Durchführung des Verfahrens dienende Vorrichtung, und es bedeutet :

Figur 1 Aufsicht auf die Vorrichtung in schematischer Darstellung ;

Figur 2 Querschnitt gemäß Fig. 1 ;

Figur 3 Darstellung gemäß Fig. 1 einer abgewandelten Ausführungsform der Vorrichtung ;

Figur 4 Teilaufsicht gemäß Fig. 3 in größerter Darstellung.

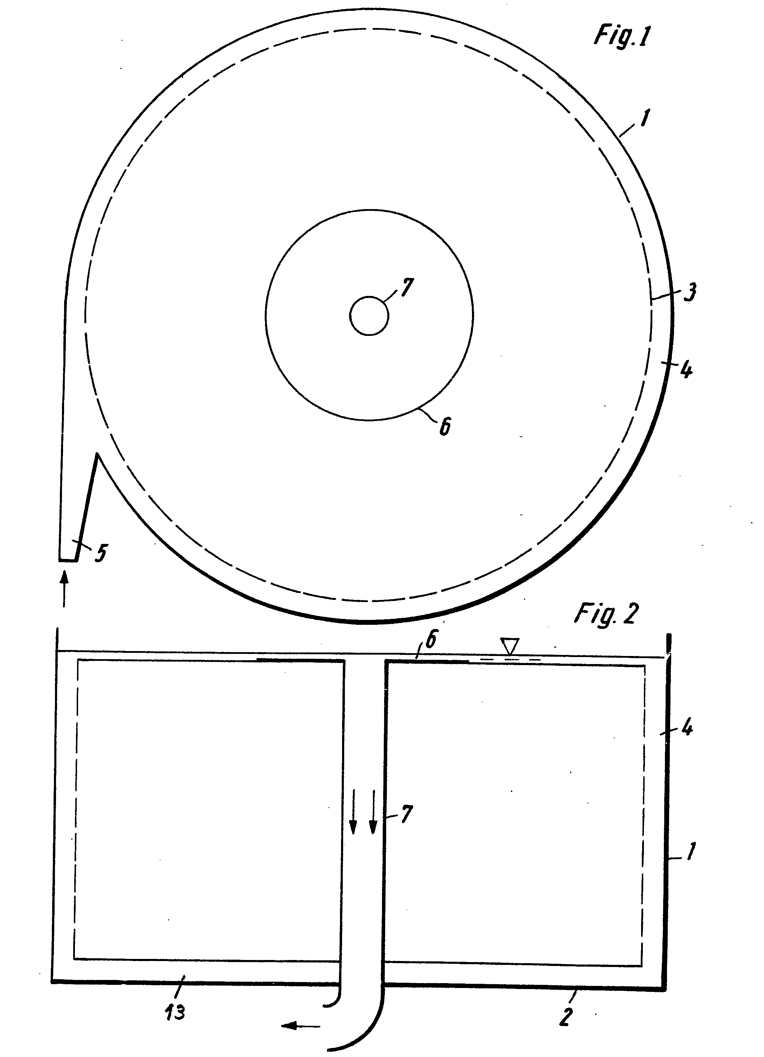

Wie die Fig. 1 und 2 zeigen, ist ein mit einem Boden 2 ausgestatteter zylindrischer Behälter 1 vorgesehen. In dem zylindrischen Behälter ist unter Bildung eines Ringspaltes 4 eine zylindrische Zwischenwand 3 angeordnet, die aus gelochten Blechen zusammengesetzt ist. Die Zwischenwand 3 durchgreift den Behälter 1 unter Bildung eines Bodenspaltes 13, der zur Anordnung eines nicht dargestellten auf dem Boden 2 befindlichen drehbaren Räumers dient, durch den die auf dem Boden 2 abgesetzten Flocken ausgetragen werden. In der Mitte des Behälters 1 ist eine axial zum Behälter liegende Rohrleitung 7 vorgesehen, die oberseitig offen ist und den Boden 2 des Behälters 1 durchgreift. An dem oberen Ende der Rohrleitung 7 ist eine ringförmige Scheibe 6 angeordnet, die unterhalb des im Behälter 1 befindlichen Wasserspiegels liegt.

Das Rohwasser wird dem Behälter 1 tangential über einen Zulaufstutzen 5 zugeführt. Das durch den Zulaufstutzen 5 einströmende Wasser wird in seiner Umfangsgeschwindigkeit durch die vorgesehene Zwischenwand 3 so abgebremst, daß vom gesamten Umfang her eine radiale nach innen gerichtete, durch einen durch die Zwischenwand 3 verbleibenden Restdrall überlagerte Strömung sich ergibt, die im Bereich der Behältermitte in eine senkrecht aufwärtsgerichtete Strömung übergeht, deren Geschwindigkeit geringer ist als die Sinkgeschwindigkeit der Flocken, die beim Durchströmen des von der Zwischenwand 3 umschlossenen Raumes abgesunken sind und sich auf dem Behälterboden 2 abgesetzt haben. Der Sedimentationsbehälter ist auch betriebsbereit bei niedrigen Temperaturen, da auch bei einer Eisbildung die Sedimentation aufrechterhalten werden kann, sogar dann, wenn die Oberfläche des Behälters von einer Eisschicht bedeckt ist, da die Scheibe 6 unterhalb des Spiegels und damit unterhalb der gebildeten Eisfläche liegt, so daß eine einwandfreie Abführung des Klarwassers auch bei winterlichen Temperaturen gewährleistet ist.

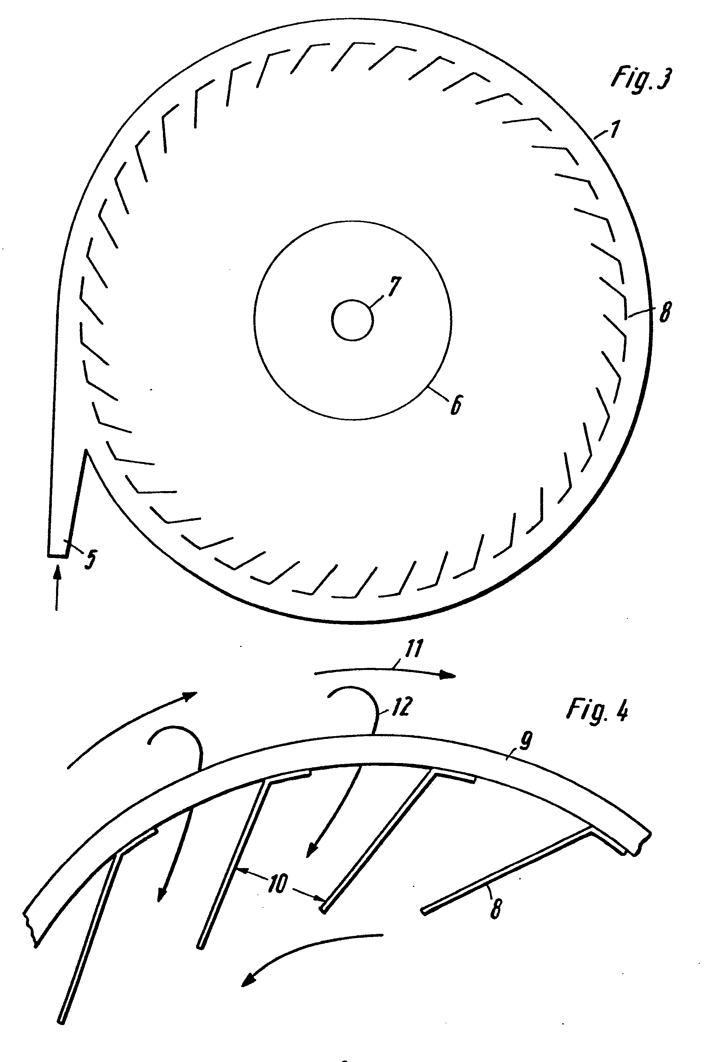

Die Fig. 3 und 4 zeigen eine abgewandelte Ausführungsform. Anstelle der aus Lochblechen gebildeten Zwischenwand 3 gemäß Fig. 1 besteht die Zwischenwand aus Leitblechen 8, die zwischen einem oberen und einem unteren Ringkörper 9 angeordnet und über den inneren Umfang verteilt befestigt sind. Zwischen je zwei benachbarten Leitflächen 8 wird ein senkrechter Durchtrittsspalt 10 für das Rohwasser gebildet. Die Leitflächen 8 sind entgegengesetzt der durch Pfeile 11 angegebenen Richtungen des in den Behälter 1 einströmenden Rohwassers gerichtet, so daß der durch die Pfeile 11 bezeichnete Drall in seiner Richtung umgekehrt wird, wie die Pfeile 12 zeigen, wobei im Inneren des Behälters 1 ein Gegendrall herrscht, der durch entsprechende Einstellung der Neigungen der Leitflächen 8 so bemessen werden kann, daß ein einwandfreies Absinken der Flocken gewährleistet ist.

## Ansprüche

1. Verfahren zur Aufbereitung von Rohwasser in einem zylindrischen Behälter im Wege der Sedimentation mittels eines dem Wasser zugegebenen Flockungsmittels, wobei das mit dem Flockungsmittel versetzte Wasser tangential in den Behälter eingeleitet wird, den Behälter durchströmt und nach einer ausreichenden Verweilzeit aus dem Behälter mit einer die Sinkgeschwindigkeit der Flocken unterschreitenden Steiggeschwindigkeit von der Wasseroberfläche abgeführt wird, dadurch gekennzeichnet, daß die Umfangsgeschwindigkeit des am Umfangsbereich des Behälters einströmenden Wassers durch Abbremsung an einer konzentrischen Zwischenwand mit auf ihrem Umfang verteilten Durchbrechungen so weit verringert wird, daß das Auftreten von aufwärtsgerichteten Sekundärströmungen unterbunden wird, und daß das Klarwasser durch die Behältermitte nach unten abgeführt wird.

2. Vorrichtung zur Durchführung des Verfahrens nach Anspruch 1 mit einem zylindrischen Behälter, der wenigstens einen tangential zu seiner zylindrischen Wand gerichteten Zuflußstutzen aufweist, dadurch gekennzeichnet, daß in dem Behälter (1) eine mit seiner zylindrischen Umfangswand einen Ringspalt (4) bildende, den Behälter (1) bis in die Nähe des Bodens durchgreifende, mit auf ihrem Umfang verteilten Durchbrechungen versehene Zwischenwand (3) angeordnet ist, und daß in der Behältermitte eine axiale den Behälterboden (2) durchgreifende Rohrleitung (7) vorgesehen ist, die an ihrem oberen offenen Ende eine Zentrische, unterhalb des Wasserspiegels des Behälters (1) liegende ringförmige Scheibe (6) trägt.

3. Vorrichtung nach Anspruch 2, dadurch gekennzeichnet, daß die Zwischenwand aus einer Mehrzahl von zu einem Zylinder aneinandergefügten, mit Lochungen versehenen Blechen rechteckigen Querschnitts besteht.

4. Vorrichtung nach Anspruch 2, dadurch gekennzeichnet, daß die Zwischenwand (3) aus einem oberen und einem unteren Ring (9) besteht, zwischen denen an den Ringinnenflächen befestigte, über den Umfang verteilte, Durchtrittsspalte bildende Leitflächen (8) angeordnet sind.

5. Vorrichtung nach Anspruch 4, dadurch gekennzeichnet, daß die Leitflächen (8) der Richtung des in den Behälter einströmenden Rohwassers entgegengesetzt gerichtete Neigungen aufweisen.

6. Vorrichtung nach Anspruch 2 bis 5, dadurch gekennzeichnet, daß zwischen dem Boden (2) des Behälters (1) und dem unteren Ende der Zwischenwand ein der Aufnahme eines Räumers dienender Spalt (13) besteht.

## Claims

1. Process for the treatment of untreated water in a cylindrical container by sedimentation by means of a flocculating agent added to the water, the water mixed with the flocculating agent being tangentially introduced into the container, flows through the latter and following an adequate residence time is removed from the container with an upward flow rate of the water surface which is less than the downward flow rate of the flakes, characterized in that the circumferential speed of the water flowing in at the circumferential area of the container is reduced to such an extent through deceleration on a concentric partition with openings distributed over its periphery that the occurrence of upwardly directed secondary flows is prevented and the clarified water is removed downwards through the centre of the container.

2. Apparatus for performing the process according to claim 1 with a cylindrical container having at least one feed connection directed tangentially to its cylindrical wall, characterized in that the container (1) contains a partition (3), whose cylindrical circumferential wall forms an annular clearance (4), passed through container (1) into the vicinity of its bottom and has openings distributed over its periphery, and that in the centre of the container is provided an axial pipe (7) passing through the container bottom (2), pipe (7) carrying at its upper, open end a circular disk (6) positioned centrally below the water level of container (1).

3. Apparatus according to claim 2, characterized in that the partition comprises a plurality of plates with a rectangular cross-section and having perforations, which are joined together to form a cylinder.

4. Apparatus according to claim 2, characterized in that partition (3) comprises an upper and a lower ring (9) between which are arranged circumferentially distributed deflectors (8), which are fixed to the ring inner faces and form gaps.

5. Apparatus according to claim 4, characterized in that the deflectors (8) slope in the opposite direction to the untreated water flowing into the container.

6. Apparatus according to claim 2 to 5, characterized in that there is a gap (13) for receiving a scraper between the bottom (2) of container (1) and the lower end of the partition.

## Revendications

1. Procédé de traitement d'eaux brutes dans une cuve cylindrique par voie de sédimentation, au moyen d'un agent floculant ajouté à l'eau, d'après lequel l'eau additionnée de floculant est introduite tangentiellement dans la cuve qu'elle parcourt et dont elle est extraite, après un séjour suffisamment long, à la surface, où elle arrive à une vitesse ascensionnelle inférieure à la vitesse de chute des flocons, caractérisé en ce que la vitesse périphérique de l'eau, pénétrant dans la cuve par la région périphérique de celle-ci, est suffisamment décélérée, par freinage le long d'une cloison intermédiaire concentrique pourvue de perforations distribuées sur son pourtour, pour inhiber la formation de courants ascendants secondaires, tandis que l'eau clarifiée est évacuée vers le bas en traversant le centre de la cuve.

2. Dispositif pour l'exécution du procédé selon la revendication 1, comportant une cuve cylindrique pourvue d'au moins une tubulure d'arrivée orientée tangentiellement à sa paroi cylindrique et caractérisé en ce qu'une cloison intermédiaire (3), disposée dans la cuve (1) de manière à former avec elle un interstice annulaire (4), traversant la cuve (1) sur toute sa hauteur jusqu'au voisinage du fond, porte des discontinuités distribuées sur tout son pourtour, que dans la région centrale de la cuve est disposée une canalisation tubulaire axiale (7) traversant le fond (2) de la cuve et que ladite canalisation porte, sur son extrémité haute ouverte, un disque annulaire (6) centré, situé au-dessous du niveau de l'eau de la cuve (1).

3. Dispositif selon la revendication 2, caractérisé en ce que la cloison intermédiaire se compose d'un certain nombre de tôles de section rectangulaire, pourvues de perforations et assemblées pour former un cylindre.

4. Dispositif selon la revendication 2, caractérisé en ce que la cloison intermédiaire (3) se compose d'un anneau supérieur et d'un anneau inférieur (9) entre lesquels sont disposées des surfaces déflectrices (8) fixées sur les faces intérieures desdits anneaux distribués sur le pourtour et formant des interstices de passage.

5. Dispositif selon la revendication 4, caractérisé en ce que les surfaces déflectrices (8) présentent des inclinaisons orientées à l'opposé de la direction de l'eau brute pénétrant dans la cuve.

6. Dispositif selon les revendications 2 à 5, caractérisé en ce qu'un intervalle (13), destiné à l'installation d'une râcle d'évacuation, subsiste entre le fond (2) de la cuve (1) et le bord inférieur de la cloison intermédiaire.

0 025 068

*Fig.1*

*Fig. 2*

Fig. 3

Fig. 4